# EUROPEAN PATENT APPLICATION

(11) **EP 4 401 176 A1**
(43) Date of publication of application: **17.07.2024**
(21) Application number: 22867722.5
(22) Date of filing: 08.09.2022
(51) Int. Cl.: H01M 8/2484, H01M 8/2475, H01M 8/249, H01M 8/04082, H01M 8/04089

(54) **INDEPENDENT FUEL CELL FACILITY**

(30) Priority: 13.09.2021 KR 20210121596
(71) Applicant: Bumhan Fuel Cell Co., Ltd., Gyeongsangnam-do 51343 (KR)
(72) Inventor: SHIN, Hyun Khil, Changwon-si Gyeongsangnam-do 51343 (KR); CHA, Jungkyung, Changwon-si Gyeongsangnam-do 51343 (KR)
(74) Representative: BCKIP Part mbB
(86) International application number: PCT/KR2022/013515
(87) International publication number: WO 2023/038454

(57) **Abstract**

An independent fuel cell facility comprises: a frame; a plurality of fuel cell stack modules mounted on the frame; and a fluid pipe unit for providing passages through which a fluid, that flows into and flows out of the fuel cell stack modules, flows, wherein the fluid pipe unit is configured to be branched into a plurality of passages from one side thereof and individually connected to the plurality of fuel cell stack modules, and the plurality of passages connected to the plurality of fuel cell modules are configured to be independently opened and closed.

## Description

### TECHNICAL FIELD

The present disclosure relates to an independent fuel cell facility.

### BACKGROUND ART

In general, a fuel cell is a power generation device that converts the chemical energy of hydrogen and oxygen in the air into electrical energy. Depending on the type of electrolyte used, fuel cells can be categorized as alkaline fuel cell (AFC), phosphoric acid fuel cell (PAFC), and molten carbonate fuel cell (MCFC), polymer electrolyte membrane fuel cell (PEMFC), etc. The most basic stack unit that generates electricity in a fuel cell is a membrane-electrode assembly (MEA), which consists of an electrolyte membrane and anode and cathode electrodes formed on both sides of the electrolyte membrane. First, at the anode electrode, an oxidation reaction of the fuel occurs to generate hydrogen ions and electrons, and the hydrogen ions move to the cathode electrode through the electrolyte membrane. At the cathode electrode, the hydrogen ions and electrons transferred through the electrolyte membrane react with oxygen (oxidant) to produce water, which causes the movement of the electrons to the external circuit.

Meanwhile, in a typical fuel cell device, a plurality of pipes through which oxygen, coolant, and hydrogen flow are respectively connected to a plurality of fuel cell modules, and the plurality of pipes are integrally connected, and all communicate with one on/off valve.

Therefore, if one fuel cell module among the plurality of fuel cell modules fails, it is necessary to block the flow of oxygen, coolant, and hydrogen flowing to all of the plurality of fuel cell modules by closing the opening/closing valve, and all of the plurality of pipes need to be disconnected from the fuel cell modules to repair the failed fuel cell module.

As a result, not only the failed fuel cell module but also the remaining fuel cell modules that are operating normally are shut down, and the entire fuel cell device including the plurality of fuel cell modules cannot be used to produce electrical energy while the failed fuel cell module is being repaired.

### DETAILED DESCRIPTION OF INVENTION

### TECHNICAL PROBLEMS

The present disclosure is based on the above background, and provides an independent fuel cell facility in which each of a plurality of fuel cell stack modules is mounted to a frame to be independently removable, and a connection channel of a fluid pipe unit is connected to the plurality of fuel cell stack modules to be independently and individually removable, so that only the fuel cell stack module that has problems such as failure can be individually separated from the frame for repair, maintenance, and the like.

### TECHNICAL SOLUTION

In accordance with one aspect of the present disclosure, there is provided an independent fuel cell facility comprising: a frame; a plurality of fuel cell stack modules mounted to the frame; and a fluid pipe unit that provides passages through which fluid flowing into the fuel cell stack modules and fluid flowing out of the fuel cell stack modules flow, wherein the fluid pipe unit is configured to branch from one side into a plurality of passages to be individually connected to the plurality of fuel cell stack modules, and the plurality of passages connected to the plurality of fuel cell modules are configured to be independently openable and closable.

Further, the plurality of fuel cell stack modules may be mounted to the frame to be removable independently of each other.

Further, the fluid pipe unit may include: a hydrogen pipe including a first hydrogen flow path through which hydrogen flows and a first pressurized gas flow path through which pressurized gas flows; a plurality of hydrogen channels branched from the hydrogen pipe to be connected to the plurality of fuel cell stack modules and including a second hydrogen flow path and a second pressurized gas flow path through which the hydrogen and the pressurized gas flowing in the hydrogen pipe flow, respectively; and a bypass part connecting the first pressurized gas flow path and the second pressurized gas flow path by bypassing a connection portion of the first pressurized gas flow path and the second pressurized gas flow path, and wherein the plurality of hydrogen channels are connected to the plurality of fuel cell stack modules to be removable independently of each other.

Further, the first hydrogen flow path and the second hydrogen flow path may be directly connected, and the first pressurized gas flow path and the second pressurized gas flow path selectively communicate with each other through the bypass part.

Further, the fluid pipe unit may include: a common pipe that provides a passage for fluid to flow in from the outside or for the fluid to flow out to the outside; a plurality of branch pipes branched from the common pipe; and a plurality of connection channels branched from each of the plurality of branch pipes and individually connected to the plurality of fuel cell stack modules.

Further, the branch pipes may include a plurality of first fluid pipes, a plurality of second fluid pipes, and a plurality of hydrogen pipes, and the plurality of first fluid pipes, the plurality of second fluid pipes, and the plurality of hydrogen pipes are branched from the common pipe.

Further, the hydrogen pipe may include: an inner hydrogen pipe providing the first hydrogen flow path; and a pressurized gas pipe surrounding the inner hydrogen pipe to form the first pressurized gas flow path outside the inner hydrogen pipe.

Further, the hydrogen channel may include: an inner hydrogen channel branched from the inner hydrogen pipe to provide the second hydrogen flow path, and individually connected to the plurality of fuel cell stack modules; and a pressurized gas channel branched from the pressurized gas pipe to provide the second pressurized gas flow path, surrounding the inner hydrogen channel outside the inner hydrogen channel, and individually connected to the plurality of fuel cell stack modules.

The independent fuel cell facility may further comprise a blocking member disposed between the pressurized gas channel and the inner hydrogen channel to prevent flow of the pressurized gas, wherein the blocking member is disposed between a connection portion where the pressurized gas pipe and the pressurized gas channel are connected to each other and a connection portion where the bypass part and the pressurized gas channel are connected to each other to prevent the flow of the pressurized gas.

The independent fuel cell facility may further comprise a bypass valve disposed in the bypass part to allow or block movement of the pressurized gas; and a hydrogen valve disposed in the inner hydrogen channel to allow or block movement of the hydrogen.

The independent fuel cell facility may further comprise a plurality of connectors provided to the plurality of connection channels, wherein each of the plurality of fuel cell stack modules includes a first opening, a second opening, and a hydrogen opening, and at least one of the plurality of connectors is connected to at least one of the first opening, the second opening, and the hydrogen opening to be independently removable.

Further, at least a portion of the pressurized gas channel may include a corrugated pipe configured to be stretchable and contractible.

The independent fuel cell facility may further comprise a support unit to which the fuel cell stack module is mounted to alleviate shock applied to the fuel cell stack modules from outside.

### EFFECT OF INVENTION

According to one embodiment of the present disclosure, each of the plurality of fuel cell stack modules can be mounted to the frame to be independently removable, so that only the fuel cell stack module in question that has a problem such as a failure is individually separated from the frame for repair, maintenance, and the like.

In addition, the connection channels of the fluid pipe units are individually connected to the plurality of fuel cell stack modules to be independently removable, so that the connection channel can be separated only from the fuel cell stack module that has a problem such as failure or malfunction, and only the fuel cell stack module can be individually separated from the frame for repair, maintenance, and the like, while the remaining fuel cell stack modules that are operating normally among the plurality of fuel cell stack modules are maintained in the operating state.

In addition, when the hydrogen channel including the inner hydrogen channel and the pressurized gas channel is to be separated from the fuel cell stack module, the inner hydrogen channel and the pressurized gas channel can be safely separated from the fuel cell stack module.

Further, by forming the pressurized gas channel to surround the inner hydrogen channel, it is possible to prevent hydrogen, which may pose a risk of explosion, from leaking out from the inner hydrogen channel even if a leak occurs in the inner hydrogen channel.

Furthermore, the compatibility of the connector parts can be increased by forming the connectors in various ways.

In addition, the front and rear, left and right, and top and bottom sides of the fuel cell stack module can be protected from impacts that may be applied from the outside by the support unit on which the fuel cell stack module is mounted.

### BRIEF DESCRIPTION OF THE DRAWINGS

FIG. 1 is a perspective view of an independent fuel cell facility according to one embodiment of the present disclosure.
FIGS. 2 and 3 are diagrams showing the coupling relationship between a fuel cell stack module and a fluid pipe unit of the independent fuel cell facility according to one embodiment of the present disclosure.
FIG. 4 is a cross-sectional view of a hydrogen inflow channel of the independent fuel cell facility according to one embodiment of the present disclosure.
FIG. 5 is a cross-sectional view of a hydrogen outflow channel of the independent fuel cell facility according to one embodiment of the present disclosure.
FIG. 6 is a diagram showing a configuration in which a connection channel of the fuel cell stack module is coupled to the fuel cell stack module, according to one embodiment of the present disclosure.
FIG. 7 is a diagram showing a configuration in which a hydrogen channel of the fuel cell stack module is coupled to the fuel cell stack module, according to one embodiment of the present disclosure.
FIG. 8 is a perspective view showing the fuel cell stack module of the independent fuel cell facility mounted on a support unit, according to one embodiment of the present disclosure.

### BEST MODE FOR CARRYING OUT THE INVENTION

Hereinafter, specific embodiments for implementing the technical ideas of the present disclosure will be described in detail with reference to the drawings.

In addition, in describing the present disclosure, when it is determined that the detailed description of the relevant known configuration or function may obscure the main idea of the present disclosure, the detailed description thereof will be omitted.

Further, when it is described that a component is "coupled to", "supported by", "connected to", "supplied to", "transferred to", and "brought in contact with" another component, it should be understood that it may be directly coupled to, supported by, connected to, supplied to, transferred to, and brought in contact with another component, but there may be other components therebetween.

The terms used in the present specification are used merely to describe the specific embodiments and are not intended to limit the present disclosure. Singular expressions include the plural expressions unless the context clearly indicates otherwise.

In addition, it should be noted in advance that expressions such as upper, lower, and side in the present specification are defined based on the drawings, and may be expressed differently if the orientation of the corresponding object changes. For the same reason, in the accompanying drawings, some components are exaggerated, omitted, or schematically shown, and the size of each component does not entirely reflect the actual size.

Furthermore, the terms containing ordinal numbers, such as first, second, etc., may be used to describe various components, but the components are not limited by such terms. These terms are used only to distinguish one component from another.

The meaning of "include" used herein is intended to specify certain features, areas, integers, steps, operations, elements, and/or components, and is not intended to exclude the existence or the addition of other specific features, areas, integers, steps, operations, elements, components, and/or groups thereof.

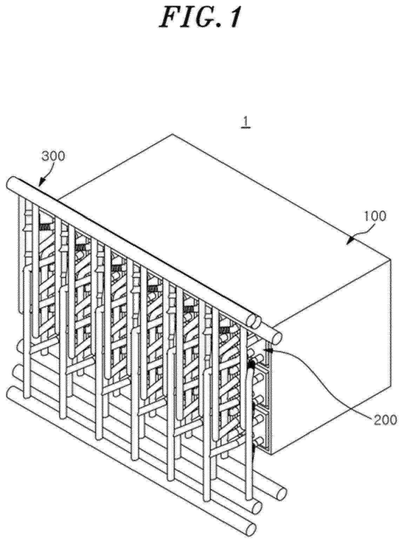

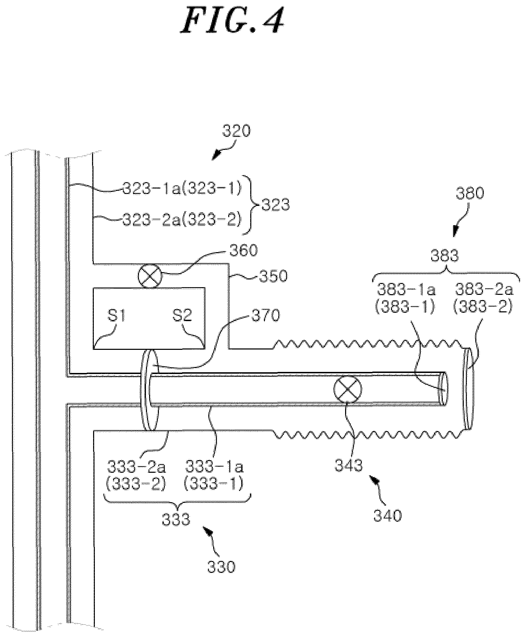

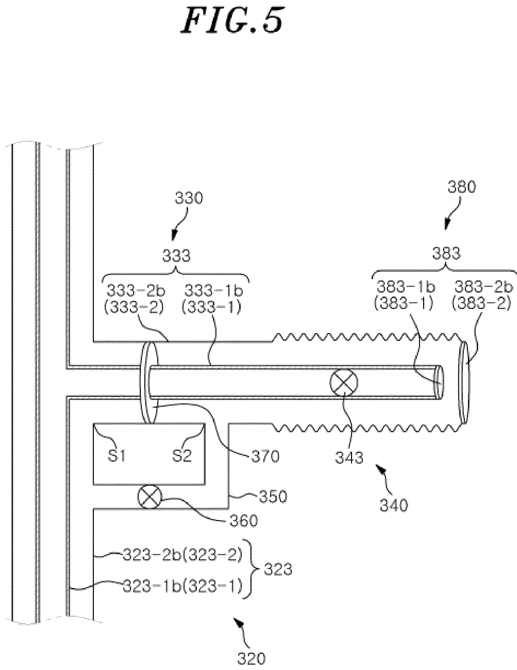

Hereinafter, the specific configuration of an independent fuel cell facility 1 according to one embodiment of the present disclosure will be described with reference to the drawings. Referring FIGS. 1 to 5, in the present embodiment, the independent fuel cell facility 1 may include a frame 100, a fuel cell stack module 200, a fluid pipe unit 300, and a support unit 400.

The frame 100 may be formed to accommodate and mount all or each of a plurality of fuel cell stack modules 200 individually, and the frame 100 may have a rectangular polyhedral shape and may be made of a material such as metal or plastic.

The fuel cell stack module 200 can perform a power generation function by converting the chemical energy of hydrogen and oxygen in the air into electrical energy, and may be installed to supply electrical energy to ships, submersibles, submarines, etc. A plurality of fuel cell stack modules 200 may be provided, and may be mounted to the frame 100 to be removable independently of each other. In other words, all of the plurality of fuel cell stack modules 200 may be mounted on the frame 100, and each of the plurality of fuel cell stack modules 200 may be mounted to the frame 100 to be independently removable. Meanwhile, the fuel cell stack module 200 is a module applied to ships and submarines, and in the case of a 60 kw class module, 18 fuel cell stack modules 200 with dimensions of 55 × 30 × 80 cm can be mounted on the frame 100, so that the 18 fuel cell stack module 200 can produce 1,080 kw of electrical energy. The electrical energy production and numerical values of the fuel cell stack modules 200 may vary depending on the design type.

The fuel cell stack module 200 may include a stack body 210, a first opening 220, a second opening 230, and a hydrogen opening 240. A plurality of first openings 220, a plurality of second openings 230, and a plurality of hydrogen openings 240 may be disposed on a front surface of stack body 210.

The stack body 210 may be a body that forms the exterior of the fuel cell stack module 200. The stack body 210 may have a polyhedral shape extending in one direction, for example, a rectangular parallelepiped shape, and may be made of a material such as metal, plastic, or the like.

The first opening 220 may be formed to be connected to a first connector 381 coupled to a first fluid channel 331 of the fluid pipe unit 300, which will be described later, and oxygen from the first fluid channel 331 may flow in through a first inlet 221 of the first opening 220 or oxygen may flow out through a first outlet 222 of the first opening 220. A detailed description of the above-mentioned connection relationship will be provided later. Hereinafter, in the present embodiment, 'inflow' refers to the inflow of fluid from the fluid pipe unit 300 to the fuel cell stack module 200, and 'outflow' refers to the fluid from the fuel cell stack module 200 to the fluid pipe unit 300. Further, the fluid will be described as hydrogen, coolant, hydrogen, and pressurized gas (e.g., nitrogen, argon gas, etc.) by way of example.

The second opening 230 may be formed to be connected to a second connector 382 coupled to a second fluid channel 332 of the fluid pipe unit 300, which will be described later, and coolant from the second fluid channel 332 may flow in through the second inlet of the second opening 230 and coolant may flow out through the second outlet 232 of the second opening 230. A detailed description of the above-mentioned connection relationship will be described later.

The hydrogen opening 240 may be formed to be connected to a hydrogen connector 383 coupled to a hydrogen channel 333 of the fluid pipe unit 300, which will be described later, and hydrogen and pressurized gas from the hydrogen channel 333 may flow in through the hydrogen inlet 241 of the hydrogen opening 240 or hydrogen and pressurized gas may flow out through the hydrogen outlet 242 of the hydrogen opening 240. The hydrogen connector 383 includes an inner hydrogen connector 383-1 and a pressurized gas connector 383-2, and a detailed description of the above-mentioned connection relationship will be described later.

The fluid pipe unit 300 may function to provide a passage through which fluid flowing into the fuel cell stack module 200 from the outside or fluid flowing out of the fuel cell stack module 200 flows. The fluid pipe unit 300 may be configured to branch off from one side into a plurality of passages that are individually connected to the plurality of fuel cell stack modules 200, and the plurality of passages connected to the plurality of fuel cell stack modules 200 may be configured to be opened/closed independently. The fluid pipe unit 300 includes a common pipe 310, a branch pipe 320, a connection channel 330, an opening/closing unit 340, a bypass part 350, a bypass valve 360, a blocking member 370, and a connector 380.

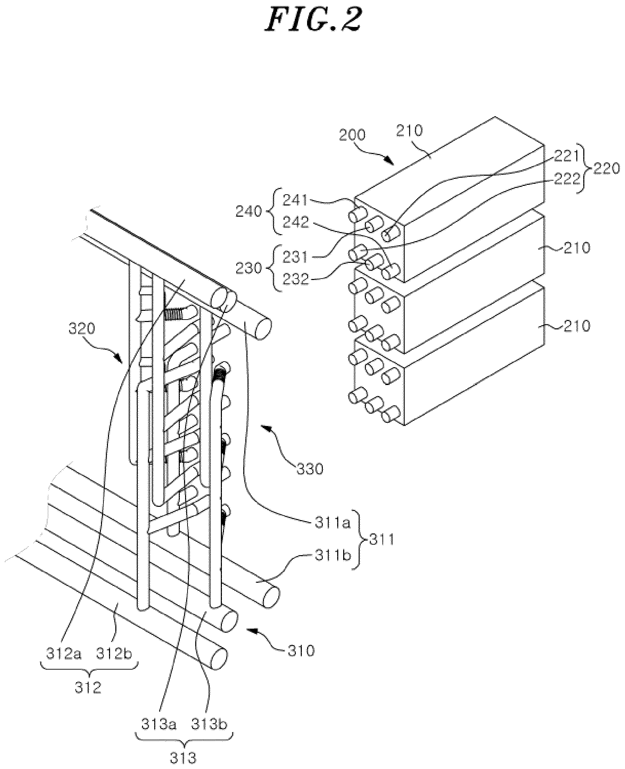

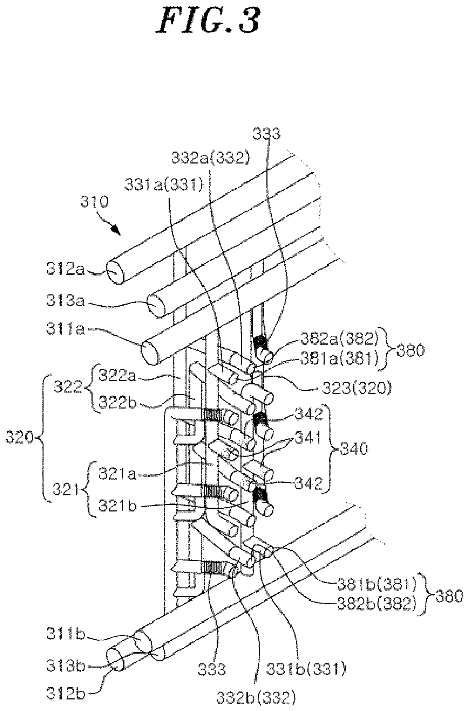

Referring again to FIGS. 2 and 3, the common pipe 310 may function to provide a passage through which fluid can flow into the fuel cell stack module 200 from the outside or fluid can flow out of the fuel cell stack module 200, and may include a first common pipe 311, a second common pipe 312, and a hydrogen common pipe 313.

The first common pipe 311 may function to provide a passage for oxygen to flow in from the outside or for oxygen to flow out to the outside, and may include a first common inflow pipe 311a and a first common outflow pipe 311b. The first common inflow pipe 311a may provide a passage for oxygen to flow into the fuel cell stack module 200 from the outside, and may be formed to extend horizontally and disposed at a front upper side of the fuel cell stack module 200. The first common outflow pipe 311b may provide a passage for oxygen to flow out from the fuel cell stack module 200, and may be formed to extend horizontally and disposed at front lower side of the fuel cell stack module 200.

The second common pipe 312 may function to provide a passage for coolant to flow in from the outside or for coolant to flow out to the outside, and may include a second common inflow pipe 312a and a second common outflow pipe 12b. The second common inflow pipe 312a may provide a passage for coolant to flow into the fuel cell stack module 200 from the outside, and may be formed to extend horizontally and disposed at the front upper side of the fuel cell stack module 200. The second common outflow pipe 312b may provide a passage for coolant to flow out from the fuel cell stack module 200, and may be formed to extend horizontally and disposed at the front lower side of the fuel cell stack module 200.

The hydrogen common pipe 313 may function to provide a passage for hydrogen and pressurized gas to flow in from the outside or for hydrogen and pressurized gas to flow out to the outside, and may include a hydrogen common inflow pipe 313a and a hydrogen common outflow pipe 313b. The hydrogen common inflow pipe 313a may provide a passage for hydrogen and pressurized gas to flow into the fuel cell stack module 200 from the outside, and may be formed to extend horizontally and may be disposed at the front upper side of the fuel cell stack module 200. The hydrogen common outflow pipe 313b may provide a passage for hydrogen and pressurized gas to flow out from the fuel cell stack module 200, and may be formed to extend horizontally and disposed at the front lower side of the fuel cell stack module 200. The hydrogen common inflow pipe 313a and the hydrogen common outflow pipe 313b may be formed in the form of an inner tube and an outer tube, respectively, and the inner tube may provide a passage for hydrogen to flow, and the outer tube may provide a passage for pressurized gas such as nitrogen or argon to flow. In this case, since hydrogen is a substance with a risk of explosion, the inner tube itself may be formed as a double tube.

The branch pipe 320 may include a plurality of first fluid pipes 321, a plurality of second fluid pipes 322, and a plurality of hydrogen pipes 323, and the plurality of first fluid pipes 321, the plurality of second fluid pipes 322, and the plurality of hydrogen pipes 323 may be formed to branch from the common pipe 310.

The first fluid pipe 321 is branched from the first common pipe 311 and may function to provide a passage through which hydrogen flows, and may include a first fluid inflow pipe 321a and a first fluid outflow pipe 321b. The first fluid inflow pipe 321a may be formed to branch off from the first common inflow pipe 311a and extend in an up-down direction, and may be disposed at the front side of the fuel cell stack module 200. The first fluid outflow pipe 321b may be formed to branch off from the first common outflow pipe 311b and extend in the up-down direction, and may be disposed at the front side of the fuel cell stack module 200.

The second fluid pipe 322 is branched from the second common pipe 312 and may function to provide a passage through which coolant flows, and may include a second fluid inflow pipe 322a and a second fluid outflow pipe 322b. The second fluid inflow pipe 322a may be formed to branch off from the second common inflow pipe 312a and extend in the up-down direction, and may be disposed at the front side of the fuel cell stack module 200. The second fluid outflow pipe 322b may be formed to branch off from the second common outflow pipe 312b and extend in the up-down direction, and may be disposed at the front side of the fuel cell stack module 200.

Referring again to FIGS. 3, 4, and 5, the hydrogen pipe 323 is branched from the hydrogen common pipe 313 and may function to provide a double passage through which hydrogen and pressurized gas flow, and may include an inner hydrogen pipe 323-1 and a pressurized gas pipe 323-2.

The inner hydrogen pipe 323-1 may be formed as an inner tube disposed inside the hydrogen pipe 323 and may provide a passage through which hydrogen flows. In addition, hydrogen is a substance with a risk of explosion, and the inner hydrogen pipe 323-1 itself may be formed as a double pipe. The inner hydrogen pipe 323-1 may include a hydrogen inflow pipe 323-1a and a hydrogen outflow pipe 323-1b. The hydrogen inflow pipe 323-1a is formed to branch off from the hydrogen common inflow pipe 313a and extend in the up-down direction, and may be disposed at the front side of the fuel cell stack module 200, and the hydrogen outflow pipe 323-1b may be formed to branch off from the hydrogen common outflow pipe 313b and extend upward, and may be disposed at the front side of the fuel cell stack module 200.

The pressurized gas pipe 323-2 may be formed as an outer tube shape disposed outside the inner hydrogen pipe 323-1 to surround the inner hydrogen pipe 323-1, and may provide a passage through which pressurized gas such as nitrogen or argon flows. The hydrogen flowing in the inner hydrogen pipe 323-1 is a substance with a risk of explosion, and although the inner hydrogen pipe 323-1 itself is formed as the double pipe, a part of the inner hydrogen pipe 323-1 may be damaged to cause hydrogen to leak out. To prevent this, the pressurized gas pipe 323-2 is formed to surround the inner hydrogen pipe 323-1. Accordingly, even if a leakage occurs in the inner hydrogen pipe 323-1, the pressurized gas in the pressurized gas pipe 323-2 flows into the inner hydrogen pipe 323-1, which prevents hydrogen from leaking from the inner hydrogen pipe 323-1 to the outside.

The pressurized gas pipe 323-2 may include a pressurized gas inflow pipe 323-2a and a pressurized gas outflow pipe 323-2b. The pressurized gas inflow pipe 323-2a may be formed to branch off from a pipe disposed outside the hydrogen common inflow pipe 313a and extend in the up-down direction, and may be disposed at the front side of the fuel cell stack module 200. The pressurized gas outflow pipe 323-2b may be formed to branch off from a pipe disposed outside the hydrogen common outflow pipe 313b and extend upward, and may be disposed at the front side of the fuel cell stack module 200.

The connection channel 330 may be branched from each of the plurality of branch pipes 320, and the plurality of connection channels 330 may be formed to be independently and individually connected to the plurality of fuel cell stack modules 200, so that they can be connected to the plurality of fuel cell stack modules 200 to be removable individually and independently of each other. In addition, the plurality of connection channels 330 may be formed to be opened/closed independently and individually. The connection channel 330 may include a first fluid channel 331, a second fluid channel 332, and a hydrogen channel 333.

The first fluid channel 331 may be branched from the first fluid pipe 321 to provide a passage through which oxygen flows, and may include a first fluid inflow channel 331a and a first fluid outflow channel 331b. The first fluid inflow channel 331a may be branched from the first fluid inflow pipe 321a and connected to the first inlet 221 of the first opening 220 of the fuel cell stack module 200, and the first fluid outflow channel 331b may be branched from the first fluid outflow pipe 321b and connected to the first outlet 222 of the first opening 220. Meanwhile, the opening/closing unit 340 may include a first fluid valve 341, a second fluid valve 342, and a hydrogen valve 343 respectively provided in the first fluid channel 331, the second fluid channel 332, and the hydrogen channel 333, and the first fluid valve 341 with an on-off function may be disposed in the first fluid channel 331 to allow or block the flow of oxygen.

The second fluid channel 332 may be branched from the second fluid pipe 322 to provide a passage through which coolant flows, and may include a second fluid inflow channel 332a and a second fluid outflow channel 332b. The second fluid inflow channel 332a may be branched from the second fluid inflow pipe 322a and connected to the second inlet 231 of the second opening 230, and the second fluid outflow channel 332b may be branched from the second fluid outflow pipe 322b and connected to the second outlet 232 of the second opening 230 of the fuel cell stack module 200. Meanwhile, the second fluid valve 342 with an on-off function may be disposed in the second fluid channel 332 to allow or block the flow of coolant.

A plurality of hydrogen channels 333 may be branched from the hydrogen pipe 323 to be independently connected to a plurality of fuel cell stack modules 200 to provide a double passage for hydrogen and pressurized gas flowing in the hydrogen pipe 323 to flow, and may include an inner hydrogen channel 333-1 and a pressurized gas channel 333-2.

The inner hydrogen channel 333-1 may be branched from the inner hydrogen pipe 323-1 in a direction away from the inner hydrogen pipe 323-1 (for example, at right angles) to be independently and individually connected to the hydrogen opening 240, and may be connected to the hydrogen opening 240 to be independently and individually removable. The passage 323-1 in the hydrogen pipe 323 through which hydrogen flows and the passage 333-1 in the hydrogen channel 333 through which hydrogen flows may be directly connected. For example, the inner hydrogen channel 333-1 may be directly connected to the inner hydrogen pipe 323-1 so that hydrogen can flow into the inner hydrogen channel 333-1 from the inner hydrogen pipe 323-1, and may be connected to the hydrogen opening 240. Meanwhile, hydrogen is a substance with a risk of explosion, and the inner hydrogen channel 333-1 itself may be formed as a double pipe. The inner hydrogen channel 333-1 may include a hydrogen inflow channel 333-1a and a hydrogen outflow channel 333-1b. The hydrogen inflow channel 333-1a may be connected to the hydrogen inlet 241 of the hydrogen opening 240, and the hydrogen outflow channel 333-1b may be connected to the hydrogen outlet 242 of the hydrogen opening 240. Meanwhile, a hydrogen valve 343 with an on-off function may be disposed in the inner hydrogen channel 333-1 to allow or block the flow of hydrogen.

The pressurized gas channel 333-2 may be formed to branch off in a direction away from the pressurized gas pipe 323-2 (e.g., at right angles) to form a space for the pressurized gas to flow, and to surround the inner hydrogen channel 333-1 externally. The pressurized gas channel 333-2 may be independently and individually connected to the hydrogen opening 240 to be independently and individually removable. The pressurized gas channel 333-2 may include a pressurized gas inflow channel 333-2a and a pressurized gas outflow channel 333-2b. The pressurized gas inflow channel 333-2a may be connected to the hydrogen inlet 241 of the hydrogen opening 240, and the pressurized gas outflow channel 333-2b may be connected to the hydrogen outlet 242 of the hydrogen opening 240. Meanwhile, at least a portion of the pressurized gas channel 333-2 may include a corrugated pipe, a bellows, or the like, which is configured to be stretchable and contractible.

Meanwhile, the hydrogen flowing in the inner hydrogen channel 333-1 is a substance with a risk of explosion, and although the inner hydrogen channel 333-1 itself is formed in the form of a double pipe, a part of the inner hydrogen channel 333-1 may be damaged to cause hydrogen to leak out, so that to prevent this, the pressurized gas channel 333-2 may be formed to surround the inner hydrogen channel 333-1. Therefore, even if a leakage occurs in the inner hydrogen channel 333-1, the pressurized gas in the pressurized gas channel 333-2 flows into the inner hydrogen channel 333-1, which prevents hydrogen from leaking from the inner hydrogen channel 333-1 to the outside.

The bypass part 350 may function to selectively connect the pressurized gas passage 323-2 of the hydrogen pipe 323 and the pressurized gas passage 333-2 of the hydrogen channel 333 by bypassing a connection portion S1 of the passage 323-2 in the hydrogen pipe 323 through which pressurized gas flows and the passage 333-2 in the hydrogen channel 333 through which pressurized gas flows. Specifically, the bypass part 350 may be branched from the pressurized gas pipe 323-2 of the hydrogen pipe 323 and connected to the pressurized gas channel 333-2 of the hydrogen channel 333 to provide a passage through which pressurized gas can flow from the pressurized gas pipe 323-2 to the pressurized gas channel 333-2. The bypass valve 360 has an on/off function to allow or block the movement of pressurized gas and may be disposed in the bypass part 350. Accordingly, pressurized gas can selectively flow from the pressurized gas pipe 323-2 to the pressurized gas channel 333-2 by the bypass valve 360.

The blocking member 370 may be disposed between the connection portion S1 where the pressurized gas pipe 323-2 and the pressurized gas channel 333-2 are connected to each other, and a connection portion S2 where the bypass part 350 and the pressurized gas channel 333-2 are connected to each other and may function to prevent the flow of pressurized gas from the pressurized gas pipe 323-2 to the pressurized gas channel 333-2. The blocking member 370 may be formed in a disk shape to be disposed between an inner peripheral surface of the pressurized gas channel 333-2 and an outer peripheral surface of the inner hydrogen channel 333-1, and may also be formed in various other shapes to prevent the flow of pressurized gas from the pressurized gas pipe 323-2 to the pressurized gas channel 333-2.

The blocking member 370 can prevent the flow of pressurized gas from the pressurized gas pipe 323-2 to the pressurized gas channel 333-2, and the bypass part 350 and the bypass valve 360 can selectively allow the flow of pressurized gas from the pressurized gas pipe 323-2 to the pressurized gas channel 333-2. With such configurations, in the case that the flow of pressurized gas needs be allowed through the bypass part 350, when the hydrogen channel 333 is to be separated from the fuel cell stack module 200, by blocking the flow of pressurized gas from the pressurized gas pipe 323-2 to the pressurized gas channel 333-2 through the bypass valve 360 and blocking the flow of pressurized gas from the inner hydrogen pipe 323-1 to the inner hydrogen channel 333-1 through the hydrogen valve 343, the pressurized gas channel 333-2 and the inner hydrogen channel 333-1 can be separated from the fuel cell stack module 200 in a state in which the flow of pressurized gas and hydrogen is blocked.

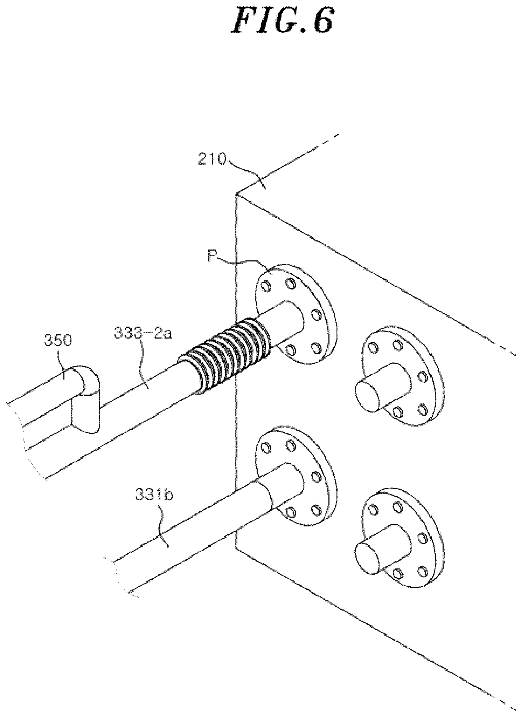

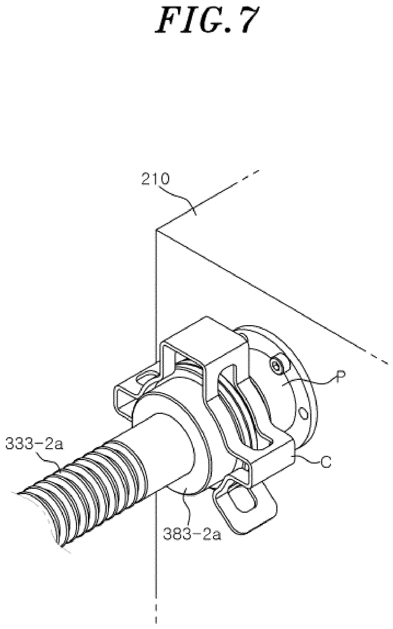

Referring to FIGS. 3 to 7, the connector 380 may be provided in the plurality of connection channels 330, and at least one of the plurality of connectors 380 may be configured to be detachably connected to one or more of the first opening 220, the second opening 230, and the hydrogen opening 240. The connector 380 may include a first connector 381, a second connector 382, and a hydrogen connector 383.

The first connector 381 may be coupled to an end of the first fluid channel 331 and may be connected to the first opening 220 to be independently and individually removable. The first connector 381 may include a first connection inlet 381a and a first connection outlet 381b. The first connection inlet 381a may be connected to the first inlet 221 of the first opening 220, and the first connection outlet 381b may be connected to the first outlet 222 of the first opening 220.

The second connector 382 may be coupled to an end of the second fluid channel 332 and may be connected to the second opening 230 to be independently and individually removable. The second connector 382 may include a second connection inlet 382a and a second connection outlet 382b. The second connection inlet 382a may be connected to the second inlet 231 of the second opening 230, the second connection outlet 382b may be connected to the second outlet 232 of the second opening 230.

The hydrogen connector 383 may be coupled to an end of the hydrogen channel 333 and may be connected to the hydrogen opening 240 to be independently and individually removable. The hydrogen connector 383 may include an inner hydrogen connector 383-1 and a pressurized gas connector 383-2.

The inner hydrogen connector 383-1 may be coupled to an end of the inner hydrogen channel 333-1 and connected to the hydrogen inlet 241 of the hydrogen opening 240. The inner hydrogen connector 383-1 may include a hydrogen inlet connector 383-1a and a hydrogen outlet connector 383-lb. The hydrogen inlet connector 383-1a may be connected to the hydrogen inlet 241 of the hydrogen opening 240, and the hydrogen outlet connector 383-1b may be connected to the hydrogen outlet 242 of the hydrogen opening 240. The pressurized gas connector 383-2 may be coupled to an end of the pressurized gas channel 333-2 and connected to the hydrogen inlet 241 of the hydrogen opening 240. The pressurized gas connector 383-2 may include a pressurized gas inlet connector 383-2a and a pressurized gas outlet connector 383-2b. The pressurized gas inlet connector 383-2a may be connected to the hydrogen inlet 241 of the hydrogen opening 240, and the pressurized gas outlet connector 383-2b may be connected to the hydrogen outlet 242 of the hydrogen opening 240.

In relation to the first opening 220, the second opening 230, and the hydrogen opening 240, the connector 380 may be connected by various connection devices, such as a bulkhead union, a one touch j oint, and a quick connector, an O ring, a clamp C, and a port P.

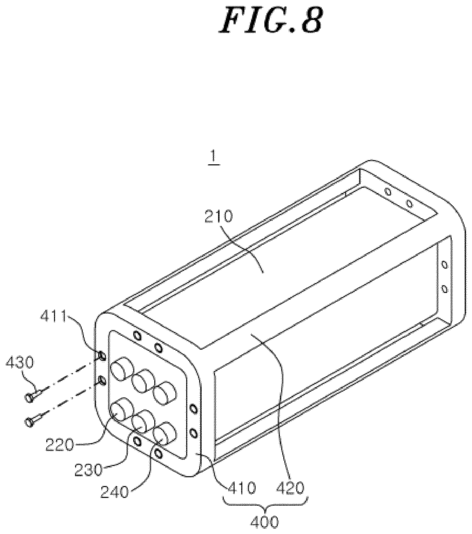

Referring to FIG. 8, the fuel cell stack module 200 may be mounted to the support unit 400 so that shock applied to the fuel cell stack module 200 from the outside can be alleviated. The support unit 400 includes first support bodies 410 spaced apart from each other at a predetermined distance at the front and rear sides of the fuel cell stack module 200, and second support bodies 420 spaced apart from each other at a predetermined distance at the side edges of the fuel cell stack module 200. The first support body 410 may have a rectangular rim shape and may be formed of an impact-resistant material such as metal, and may be arranged at a predetermined distance at the front and rear sides of the fuel cell stack module 200. The first support body 410 may be formed in such a way that the central portion, excluding the edges, is open to allow the first opening 220, the second opening 230, and the hydrogen opening 240 to be respectively connected to the first connector 381, the second connector 382, and the hydrogen connector 383. A plurality of through holes 411 may be formed in a portion of the first support body 410, and by threading connection bolts 430 through the respective through holes 411, the first support body 410 can be coupled to the stack body 210 of the fuel cell stack module 200. The second support body 420 may extend in the front-rear direction to connect the corners of the first supports 410 disposed at the front and rear sides, and may be spaced at a predetermined distance from the side edge of the fuel cell stack module 200. The second support body 420 may also be formed of an impact-resistant material such as metal. The front, rear, left and right, top and bottom sides of the fuel cell stack module 200 can all be protected from external shock by the first support bodies 410 and the second support bodies 420. The size of the inner accommodation space of the frame 100 may be adjusted so that a plurality of fuel cell stack modules 200 can be mounted to the frame 100 while being mounted to the support unit 400.

Hereinafter, the operation and effects of the independent fuel cell facility 1 having the above-described configuration will be described.

In the present embodiment, all of the plurality of fuel cell stack modules 200 can be mounted to the frame 100, and each of the plurality of fuel cell stack modules 200 can be independently removed from the frame 100. Accordingly, there is an effect that only the fuel cell stack module 200 having a problem such as a failure can be individually separated from the frame 100 for repair, maintenance, etc.

In addition, the connection channel 330 including the first fluid channel 331, the second fluid channel 332, and the hydrogen channel 333 of the fluid pipe unit 300 is formed to be branched from each of the plurality of branch pipes 320 and to be independently and individually connected to the plurality of fuel cell stack modules 200, and can be connected to the plurality of fuel cell stack modules 200 to be removable individually and independently of each other. Accordingly, among the plurality of fuel cell stack modules 200, while the normally operating fuel cell stack modules 200 are maintained in their operating states, the connection channel 330 can be separated from only the fuel cell stack module 200 having a problem such as failure and only the fuel cell stack module 200 in question can be separated from the frame 100 individually for repair, maintenance, etc.

In addition, the flow of pressurized gas from the pressurized gas pipe 323-2 to the pressurized gas channel 333-2 can be prevented by the blocking member 370, and by the bypass part 350 and the bypass valve 360, the flow of pressurized gas from the pressurized gas pipe 323-2 to the pressurized gas channel 333-2 can be selectively permitted. Therefore, when the hydrogen channel 333, including the inner hydrogen channel 333-1 and the pressurized gas channel 333-2, is to be separated from the fuel cell stack module 200, by blocking the flow of pressurized gas from the pressurized gas pipe 323-2 using the bypass valve 360 and blocking the flow of hydrogen, which has a risk of explosion, from the inner hydrogen pipe 323-1 to the inner hydrogen channel 333-1, using the hydrogen valve 343, the pressurized gas channel 333-2 and the inner hydrogen channel 333-1 can be safely separated from the fuel cell stack module 200 in a state in which the flow of pressurized gas and hydrogen is blocked.

In addition, although the inner hydrogen channel 333-1 itself is formed in the form of a double pipe, hydrogen may leak to the outside due to leakage caused by damage to a part of the inner hydrogen channel 333-1, so the pressurized gas channel 333-2 can be formed to surround the inner hydrogen channel 333-1 to prevent the leakage. Therefore, even if leakage occurs in the inner hydrogen channel 333-1, the pressurized gas in the pressurized gas channel 333-2 flows into the inner hydrogen channel 333-1, which prevents hydrogen from leaking from the inner hydrogen channel 333-1 to the outside.

In relation to the first opening 220, the second opening 230, and the hydrogen opening 240, the connector 380 can be connected with various connecting devices such as a bulkhead union, a one touch joint, and a quick connector, an O ring, a clamp C, and a port P, which increases the compatibility of the parts of the connector 380.

The front, rear, left, right, upper and lower sides of the fuel cell stack module 200 and the support unit 400 on which the fuel cell stack module 200 can be mounted can all be protected from possible impacts from the outside.

The embodiments of the present disclosure have been described above as specific embodiments, but these are only examples. The present disclosure is not limited thereto, and should be construed as having the widest scope according to the technical idea disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications are also within the scope of the present disclosure.

## Claims

1. An independent fuel cell facility comprising:
a frame;
a plurality of fuel cell stack modules mounted to the frame; and
a fluid pipe unit that provides passages through which fluid flowing into the fuel cell stack modules and fluid flowing out of the fuel cell stack modules flow,
wherein the fluid pipe unit is configured to branch from one side into a plurality of passages to be individually connected to the plurality of fuel cell stack modules, and the plurality of passages connected to the plurality of fuel cell modules are configured to be independently openable and closable.

2. The independent fuel cell facility of claim 1, wherein the plurality of fuel cell stack modules are mounted to the frame to be removable independently of each other.

3. The independent fuel cell facility of claim 2, wherein the fluid pipe unit includes:
a hydrogen pipe including a first hydrogen flow path through which hydrogen flows and a first pressurized gas flow path through which pressurized gas flows;
a plurality of hydrogen channels branched from the hydrogen pipe to be connected to the plurality of fuel cell stack modules and including a second hydrogen flow path and a second pressurized gas flow path through which the hydrogen and the pressurized gas flowing in the hydrogen pipe flow, respectively; and
a bypass part connecting the first pressurized gas flow path and the second pressurized gas flow path by bypassing a connection portion of the first pressurized gas flow path and the second pressurized gas flow path, and
wherein the plurality of hydrogen channels are connected to the plurality of fuel cell stack modules to be removable independently of each other.

4. The independent fuel cell facility of claim 3, wherein the first hydrogen flow path and the second hydrogen flow path are directly connected, and
the first pressurized gas flow path and the second pressurized gas flow path selectively communicate with each other through the bypass part.

5. The independent fuel cell facility of claim 1, wherein the fluid pipe unit includes:
a common pipe that provides a passage for fluid to flow in from the outside or for the fluid to flow out to the outside;
a plurality of branch pipes branched from the common pipe; and
a plurality of connection channels branched from each of the plurality of branch pipes and individually connected to the plurality of fuel cell stack modules.

6. The independent fuel cell facility of claim 5, wherein the branch pipes include a plurality of first fluid pipes, a plurality of second fluid pipes, and a plurality of hydrogen pipes, and
the plurality of first fluid pipes, the plurality of second fluid pipes, and the plurality of hydrogen pipes are branched from the common pipe.

7. The independent fuel cell facility of claim 3, wherein the hydrogen pipe includes:
an inner hydrogen pipe providing the first hydrogen flow path; and
a pressurized gas pipe surrounding the inner hydrogen pipe to form the first pressurized gas flow path outside the inner hydrogen pipe.

8. The independent fuel cell facility of claim 7, wherein the hydrogen channel includes:
an inner hydrogen channel branched from the inner hydrogen pipe to provide the second hydrogen flow path, and individually connected to the plurality of fuel cell stack modules; and
a pressurized gas channel branched from the pressurized gas pipe to provide the second pressurized gas flow path, surrounding the inner hydrogen channel outside the inner hydrogen channel, and individually connected to the plurality of fuel cell stack modules.

9. The independent fuel cell facility of claim 8, further comprising a blocking member disposed between the pressurized gas channel and the inner hydrogen channel to prevent flow of the pressurized gas,
wherein the blocking member is disposed between a connection portion where the pressurized gas pipe and the pressurized gas channel are connected to each other and a connection portion where the bypass part and the pressurized gas channel are connected to each other to prevent the flow of the pressurized gas.

10. The independent fuel cell facility of claim 9, further comprising:
a bypass valve disposed in the bypass part to allow or block movement of the pressurized gas; and
a hydrogen valve disposed in the inner hydrogen channel to allow or block movement of the hydrogen.

11. The independent fuel cell facility of claim 5, further comprising a plurality of connectors provided to the plurality of connection channels,
wherein each of the plurality of fuel cell stack modules includes a first opening, a second opening, and a hydrogen opening, and
at least one of the plurality of connectors is connected to at least one of the first opening, the second opening, and the hydrogen opening to be independently removable.

12. The independent fuel cell facility of claim 8, wherein at least a portion of the pressurized gas channel includes a corrugated pipe configured to be stretchable and contractible.

13. The independent fuel cell facility of claim 1, further comprising a support unit to which the fuel cell stack module is mounted to alleviate shock applied to the fuel cell stack modules from outside.
